# EUROPÄISCHE PATENTANMELDUNG

(11) **EP 2 816 802 A1**
(43) Veröffentlichungstag der Anmeldung: **24.12.2014**
(21) Anmeldenummer: 14172937.6
(22) Anmeldetag: 18.06.2014
(51) Int. Cl.: H04N 7/18, B60R 1/00, G06T 3/00

(54) **Verfahren und Vorrichtung zum Anpassen eines Bildparameters**

(30) Priorität: 20.06.2013 DE 102013211650
(71) Anmelder: Continental Automotive GmbH, 30165 Hannover (DE)
(72) Erfinder: von Rosenberg, Harald, 78126 Königsfeld (DE); Schröer, Frank, 81476 München (DE); Garschke, Thomas, 78250 Tengen (DE)

(57) **Zusammenfassung**

Ein Verfahren zum Ausgleich eines Bildparameters eines ersten Einzelbildes (101) in einem Überlappungsbereich (105) mit einem zweiten Einzelbild (102) für ein zusammengesetztes Gesamtbild (109) einer Umgebung (110) eines Kraftfahrzeugs (100) umfasst:
- Bereitstellen des ersten (101) und des zweiten (102) Einzelbildes,
- Ermitteln von mindestens einem Bildelement (111) in dem Überlappungsbereich (105), das jeweils in dem ersten (101) und in dem zweiten Einzelbild (102) vorhanden ist,
- Ermitteln eines jeweiligen Wertes des Bildparameters des Bildelementes (111) in dem ersten (101) und in dem zweiten (102) Einzelbild,
- Ermitteln eines Unterschiedes zwischen den beiden ermittelten Werten,
- Ermitteln eines Korrekturwertes für ein Anpassen des Wertes des Bildparameters des ersten Einzelbildes (101) im Überlappungsbereich in Abhängigkeit des ermittelten Unterschiedes.

## Beschreibung

Die Erfindung betrifft ein Verfahren sowie eine korrespondierende Vorrichtung zum Anpassen eines Bildparameters eines ersten Einzelbildes in einem Überlappungsbereich mit einem zweiten Einzelbild für ein zusammengesetztes Gesamtbild einer Umgebung eines Kraftfahrzeugs.

Für Kraftfahrzeuge sind Systeme bekannt, die aus den Einzelbildern verschiedener Kameras, die an unterschiedlichen Orten des Kraftfahrzeugs montiert sind, ein Gesamtbild der Umgebung des Kraftfahrzeugs erstellen. Dieses Gesamtbild wird beispielsweise auf einer Anzeigevorrichtung des Kraftfahrzeugs angezeigt und für Rückfahrt- oder Einparkassistenzsysteme verwendet. Die Kameras sind aufgrund der zueinander unterschiedlichen Einbauorte unterschiedlichen Beleuchtungs- und Umwelteinflüssen ausgesetzt. Beispielsweise weisen die Einzelbilder zueinander unterschiedliche Helligkeitswerte auf, so dass ein inhomogenes Gesamtbild entstehen kann.

Es ist wünschenswert, ein Verfahren anzugeben, das ein zuverlässiges Anpassen eines Bildparameters eines Einzelbildes ermöglicht. Zudem ist es wünschenswert, eine Vorrichtung anzugeben, die ein zuverlässiges Anpassen des Bildparameters des ersten Einzelbildes ermöglicht.

Die Erfindung zeichnet sich aus durch ein Verfahren zum Anpassen eines Bildparameters eines ersten Einzelbildes in einem Überlappungsbereich mit einem zweiten Einzelbild für ein zusammengesetztes Gesamtbild einer Umgebung eines Kraftfahrzeugs sowie eine Vorrichtung, die dazu ausgebildet ist das Verfahren auszuführen.

Gemäß Ausführungsform werden das erste und das zweite Einzelbild bereitgestellt. Mindestens ein Bildelement in dem Überlappungsbereich wird ermittelt, das jeweils in dem ersten und in dem zweiten Einzelbild vorhanden ist. Ein jeweiliger Wert des Bildparameters des Bildelementes in dem ersten und in dem zweiten Einzelbild wird ermittelt. Ein Unterschied zwischen den beiden ermittelten Werten wird ermittelt. Ein Korrekturwert für ein Anpassen des Wertes des Bildparameters des ersten Einzelbildes im Überlappungsbereich wird in Abhängigkeit des ermittelten Unterschieds ermittelt.

Somit werden korrespondierende Bildelemente, beispielsweise korrespondierende Punkte und/oder Bildinhalte, in dem ersten Einzelbild und in dem zweiten Einzelbild erkannt und identifiziert. Es können ein gemeinsames Bildelement oder eine Mehrzahl von gemeinsamen Bildelementen in den jeweiligen Einzelbildern erkannt werden, die in beiden Einzelbildern vorliegen, auch wenn die Einzelbilder jeweils in ihrer Orientierung unterschiedlich sind oder verzerrt sind. Eine Verzerrung kann beispielsweise im Randbereich und/oder Überlappungsbereich der Einzelbilder auftreten. Beispielsweise wird das erste Einzelbild von einer Frontkamera des Kraftfahrzeugs aufgezeichnet und das zweite Einzelbild von einer Seitenkamera. Die Einzelbilder werden zu dem Gesamtbild zusammengefügt und können beispielsweise für ein sogenanntes Surround-View System des Kraftfahrzeugs verwendet werden, beispielsweise für ein Top-View System.

Das ermittelte Bildelement, das jeweils in dem ersten und in dem zweiten Einzelbild vorhanden ist wird zur Ermittlung des Werts des Bildparameters verwendet. Hierdurch ergibt sich direkt ein Anhaltspunkt für unterschiedliche Werte des Bildparameters in den jeweiligen Einzelbildern. Es werden insbesondere solche Bildelemente verwendet, die unempfindlich gegen eine perspektivische Verzerrung sind.

In Abhängigkeit der unterschiedlichen Werte wird der Korrekturfaktor berechnet, und der Wert des Bildparameters in dem Überlappungsbereich entsprechend angepasst. Somit ist der Bildparameter des ersten Einzelbild und der Bildparameter des zweiten Einzelbildes im Überlappungsbereich nahezu gleich oder so aneinander angepasst, dass ein einheitliches Gesamtbild entsteht. Durch das Angleichen der Bildparameter der Einzelbilder zueinander ist es möglich, ein homogenes Gesamtbild zu erreichen. Hierbei ist es möglich, optisch nicht ansprechende harte Übergänge im Bild zu vermeiden, da nicht ein gemittelter Wert des Bildparameters über die gesamten Einzelbilder zur Anpassung des Bildparameters für das Gesamtbild verwendet wird. Der Bildparameter der Einzelbilder wird in Abhängigkeit des jeweiligen Wertes des Bildparameters des Bildelements ermittelt, das jeweils in dem ersten und in dem zweiten Einzelbild vorhanden ist. Somit ist eine verlässliche Anpassung auch bei großen Unterschieden zwischen den jeweiligen Werten des Bildparameters der Einzelbilder möglich. Große Unterschiede können beispielsweise bei einer Einfahrt des Kraftfahrzeugs in einen Tunnel auftreten, bei dem die Frontkamera bereits im Tunnel und die Seitenkamera noch außerhalb des Tunnels ist.

Gemäß Ausführungsformen ist das Bildelement ein skaleninvariantes Bildelement. Beispielsweise wird das Gesamtbild mittels der so genannten SIFT-Methode (scale invariant feature transformation; skaleninvariante Merkmalstransformation) zusammengesetzt.

Der Bildparameter umfasst gemäß Ausführungsformen eine Helligkeit des Bildelementes. Alternativ oder zusätzlich wird der Wert eines Weißabgleichs des Bildelementes ermittelt. Alternativ oder zusätzlich wird ein Wert einer Farbinformation des Bildelementes ermittelt. Alternativ oder zusätzlich wird ein Wert eines Kontrasts des Bildelementes ermittelt.

Gemäß weiteren Ausführungsformen wird der Wert eines anderen Bildparameters ermittelt, der für ein einheitlich wirkendes Gesamtbild angepasst werden muss.

Gemäß weiteren Ausführungsformen wird ein weiterer Wert des Bildparameters für ein weiteres Bildelement des ersten Einzelbildes außerhalb des Überlappungsbereichs ermittelt. Beispielsweise wird das weitere Bildelement in einem weiteren Überlappungsbereich mit einem weiteren Einzelbild ermittelt. Das weitere Einzelbild umfasst ebenfalls das weitere Bildelement. Ein Korrekturgradient für das Anpassen der Werte des Bildparameters des ersten Einzelbildes wird in Abhängigkeit des ermittelten Wertes und des ermittelten weiteren Wertes ermittelt. Beispielsweise wird linear zwischen dem Bildelement und dem weiteren Bildelement beziehungsweise zwischen dem Korrekturwert und einem weiteren Korrekturwert übergeblendet, so dass eine homogene Helligkeitsverteilung erreicht wird.

Gemäß Ausführungsformen werden das erste und das zweite Einzelbild nach dem Anpassen des Wertes des Bildparameters zu dem Gesamtbild so zusammengefügt, dass das Gesamtbild eine Surround-View Darstellung der Umgebung des Kraftfahrzeugs umfasst.

Weitere Merkmale, Vorteile und Weiterbildungen ergeben sich aus den nachfolgenden in Verbindung mit den Figuren erläuterten Beispielen. Es zeigen:
- Figur 1: eine schematische Darstellung eines Kraftfahrzeugs gemäß Ausführungsformen und
- Figur 2: ein schematisches Ablaufdiagramm eines Verfahrens gemäß Ausführungsformen.

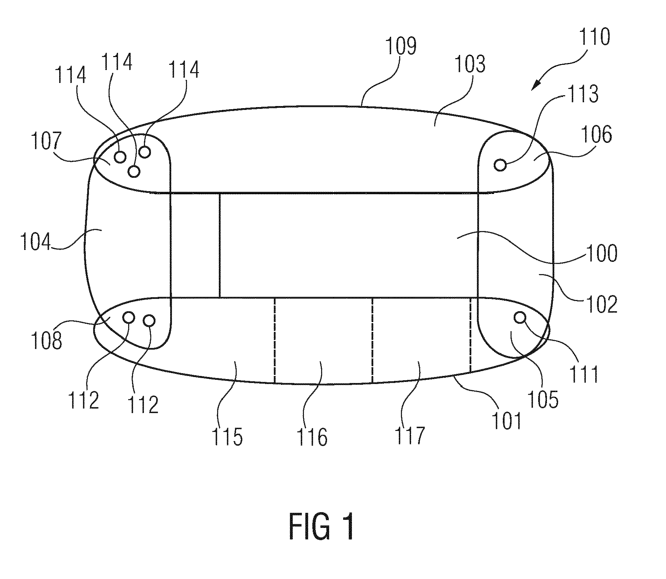

Figur 1 zeigt schematisch ein Kraftfahrzeug 100. Das Kraftfahrzeug weist eine Mehrzahl von Kameras auf, um Einzelbilder 101, 102, 103 und 104 einer Umgebung 110 des Kraftfahrzeugs 100 aufzunehmen. Beispielsweise wird das Einzelbild 101 von einer ersten Kamera aufgezeichnet. Das Einzelbild 102 wird von einer weiteren Kamera aufgezeichnet. Das Einzelbild 103 wird von einer wiederum weiteren Kamera aufgezeichnet. Das Einzelbild 104 wird von einer vierten Kamera aufgezeichnet. Gemäß weiteren Ausführungsformen sind mehr als vier oder weniger als vier Kameras vorgesehen.

Die Einzelbilder 101 bis 104 werden zu einem Gesamtbild 109 zusammengesetzt, so dass beispielsweise für einen Nutzer des Kraftfahrzeugs 100 die Umgebung 110 des Kraftfahrzeugs 100 aus beliebigen Perspektiven auf einer Anzeigevorrichtung dargestellt werden kann. Beispielsweise werden die Einzelbilder 101, 102, 103 und 104 mittels der so genannten SIFT-Methode (scale invariant feature transformation) zusammengefügt, mit der korrespondierende Punkte und Bildinhalte in den jeweiligen Einzelbildern 101, 102, 103 und 104 gefunden und identifiziert werden können.

Zum Zusammenfügen des ersten Einzelbilds 101 mit dem zweiten Einzelbild 102 wird beispielsweise ein Bildelement 111 identifiziert. Das Bildelement 111 ist sowohl in dem Einzelbild 101 als auch in dem Einzelbild 102 vorhanden. Insbesondere ist das Bildelement 111 in einem Überlappungsbereich 105 vorhanden. Der Überlappungsbereich 105 ist ein Bereich, der sowohl Teil des Einzelbildes 101 als auch Teil des Einzelbildes 102 ist. Da das Bildelement 111 von unterschiedlichen Kameras aus unterschiedlichen Perspektiven und gegebenenfalls unterschiedlichen Umweltbedingungen aufgenommen wurde, ist das Bildelement 111 in seiner Orientierung in den jeweiligen Einzelbildern 101 und 102 unterschiedlich und/oder verzerrt. Beispielsweise wird das Bildelement 111 einmal von einer Seitenkamera und einmal von einer Frontkamera aufgezeichnet.

Vergleichbar wird gemäß Ausführungsformen ein weiteres Bildelement 112 in einem weiteren Überlappungsbereich 108 zwischen dem Einzelbild 101 und dem Einzelbild 104 erkannt. Gemäß weiteren Ausführungsformen wird ein weiteres Bildelement 113 in einem weiteren Überlappungsbereich 106 zwischen dem Einzelbild 102 und dem Einzelbild 103 erkannt. Gemäß weiteren Ausführungsformen wird ein weiteres Bildelement 114 in einem weiteren Überlappungsbereich 107 erkannt.

Gemäß Ausführungsformen wird in jedem Überlappungsbereich 105 bis 108 jeweils ein einziges Bildelement 111 bis 114 ermittelt. Gemäß weiteren Ausführungsformen wird mehr als ein Bildelement 111 bis 114 je Überlappungsbereich 105 bis 108 ermittelt. Die Anzahl der ermittelten Bildelemente je Überlappungsbereich ist gemäß Ausführungsformen unterschiedlich zueinander. Wenn mehr als ein Bildelement in dem Überlappungsbereich 105 ermittelt wird, ist das nachfolgende Anpassen der Bildparameter der Einzelbilder verlässlicher.

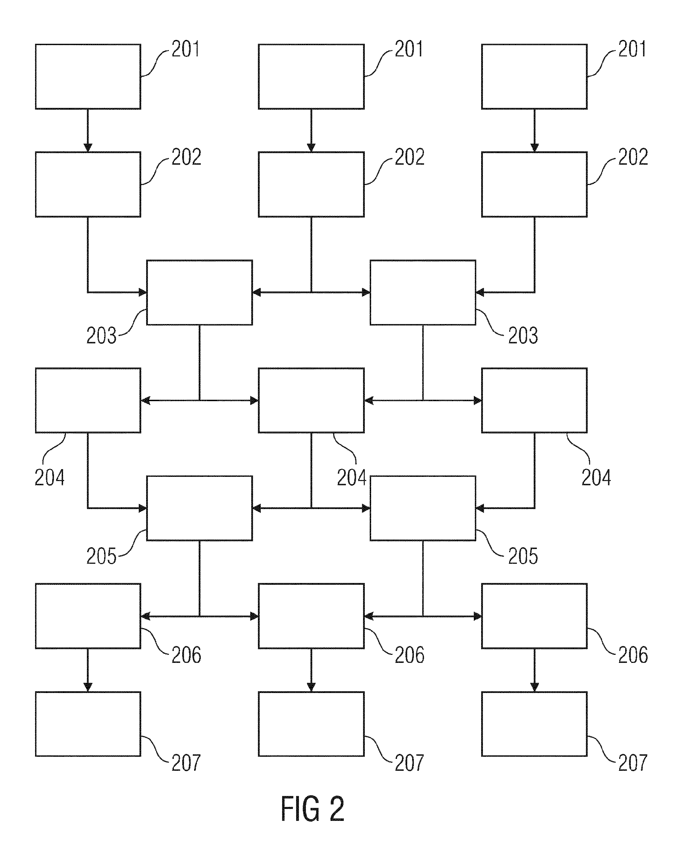

Figur 2 zeigt ein schematisches Ablaufdiagramm eines Verfahrens zum Anpassen eines Bildparameters der Einzelbilder 101 bis 104 gemäß Ausführungsformen. Figur 2 zeigt das Verfahren für drei Einzelbilder. Gemäß Ausführungsformen sind lediglich zwei Einzelbilder oder mehr als drei Einzelbilder vorhanden.

In Schritt 201 wird das Einzelbild 101, das Einzelbild 102 und das Einzelbild 103 von der jeweiligen Kamera bereitgestellt.

In Schritt 202 werden erkennbare Bildelemente in den jeweiligen Einzelbildern 101, 102 und 103 ermittelt.

In Schritt 203 werden das Bildelement oder eine Mehrzahl von Bildelementen ermittelt, die sowohl in dem ersten Einzelbild 101 als auch in dem zweiten Einzelbild 102 vorhanden sind. Entsprechend wird das Bildelement oder eine Mehrzahl von Bildelementen ermittelt, die sowohl in dem zweiten Einzelbild 102 als auch in dem dritten Einzelbild 103 vorhanden sind.

In Schritt 204 wird in jedem Einzelbild 101, 102 und 103 ein jeweiliger Wert des Bildparameters des Bildelements ermittelt. Beispielsweise wird ein jeweiliger Wert einer Helligkeit, eines Weißabgleichs, einer Farbinformation und/oder eines Kontrastes des Bildelementes in jedem des ersten Einzelbildes 101, des zweiten Einzelbildes 102 und des dritten Einzelbildes 103 ermittelt.

Der Unterschied der Werte des Bildparameters für das Bildelement 111 zwischen dem ersten Einzelbild 101 und dem zweiten Einzelbild 102 wird ermittelt. In Abhängigkeit des ermittelten Unterschiedes wird der Überlappungsbereich 105 des ersten Einzelbildes 101 angepasst, so dass die Werte der Bildparameter des ersten Einzelbildes 101 und des zweiten Einzelbildes 102 gleich oder nahezu gleich sind. Beispielsweise wird dazu der Wert des Bildparameters im Überlappungsbereich erhöht oder erniedrigt. Gemäß Ausführungsformen wird alternativ oder zusätzlich der Wert des Bildparameters des zweiten Einzelbildes 102 im Überlappungsbereich 105 in Abhängigkeit des ermittelten Unterschiedes korrigiert. Korrespondierend wird der Wert des Bildparameters im Überlappungsbereich 106 in Abhängigkeit der unterschiedlichen Werte des Bildparameters für das Bildelement 113 angepasst.

In Schritt 206 wird gemäß Ausführungsformen ein Gradient für die Anpassung der Werte des Bildparameters zwischen den Überlappungsbereichen ermittelt. Insbesondere wird ein Wert für die Anpassung der Bereiche zwischen dem Überlappungsbereich 105 und dem Überlappungsbereich 106 des zweiten Einzelbildes 102 ermittelt. Beispielsweise werden die Werte des Bildparameters zwischen dem Überlappungsbereich 105 und dem Überlappungsbereich 106 linear zwischen dem Korrekturwert für den Überlappungsbereich 105 und dem Korrekturwert für den Überlappungsbereich 106 überblendet. Entsprechend wird auch für das Einzelbild 101 und das Einzelbild 103 jeweils ein Korrekturgradient zwischen den jeweiligen Überlappungsbereichen ermittelt. Bei der in Figur 1 gezeigten Anordnung mit vier Kameras beträgt der Korrekturwert für den Überlappungsbereich 108 beispielsweise 70 % und der Korrekturwert für den Überlappungsbereich 105 beispielsweise -10 %. Der Korrekturgradient wird für diskrete Bereiche 115, 116 und 117 zwischen den Überlappungsbereichen 108 und 105 in Abhängigkeit der für die jeweiligen Überlappungsbereiche 108 und 105 ermittelten Korrekturwerte festgelegt. Beispielsweise wird für den Bereich 115 ein Korrekturwert von 50 % ermittelt. Beispielsweise wird für den Bereich 116 ein Korrekturwert von 30 % ermittelt. Beispielsweise wird für den Bereich 117 ein Korrekturwert von 10 % ermittelt.

In Schritt 207 der Figur 2 werden die Einzelbilder 101, 102 und 103 jeweils nach dem Anpassen der Werte der Bildparameter zum Zusammensetzen des Gesamtbildes 109 weiter verarbeitet. Insbesondere werden die Einzelbilder für eine Surround-View Darstellung der Umgebung 110 des Kraftfahrzeugs 100 weiter verarbeitet.

## Patentansprüche

1. Verfahren zum Anpassen eines Bildparameters eines ersten Einzelbildes (101) in einem Überlappungsbereich (105) mit einem zweiten Einzelbild (102) für ein zusammengesetztes Gesamtbild (109) einer Umgebung (110) eines Kraftfahrzeugs (100), umfassend:
- Bereitstellen des ersten (101) und des zweiten (102) Einzelbildes,
- Ermitteln von mindestens einem Bildelement (111) in dem Überlappungsbereich (105), das jeweils in dem ersten (101) und in dem zweiten Einzelbild (102) vorhanden ist,
- Ermitteln eines jeweiligen Wertes des Bildparameters des Bildelementes (111) in dem ersten (101) und in dem zweiten (102) Einzelbild,
- Ermitteln eines Unterschieds zwischen den beiden ermittelten Werten,
- Ermitteln eines Korrekturwertes für ein Anpassen des Wertes des Bildparameters des ersten Einzelbildes (101) im Überlappungsbereich in Abhängigkeit des ermittelten Unterschiedes.

2. Verfahren nach Anspruch 1, bei dem das Ermitteln des mindestens einen Bildelements (111) umfasst:
- Ermitteln von mindestens einem skaleninvarianten Bildelement (111).

3. Verfahren nach Anspruch 1 oder 2, bei dem das Ermitteln des jeweiligen Wertes des Bildparameters umfasst:
- Ermitteln eines jeweiligen Werts von Helligkeit, Weißabgleich, Farbinformation und/oder Kontrast.

4. Verfahren nach einem der Ansprüche 1 bis 3, umfassend:
- Ermitteln eines weiteren Wertes des Bildparameters für ein weiteres Bildelement (112) des ersten Einzelbildes (101) außerhalb des Überlappungsbereichs (105);
- Ermitteln eines Korrekturgradienten für das Anpassen der Werte des Bildparameters des ersten Einzelbildes (101) in Abhängigkeit des ermittelten Wertes und des ermittelten weiteren Wertes.

5. Verfahren nach einem der Ansprüche 1 bis 4, umfassend:
- Zusammenfügen des ersten (101) und des zweiten (102) Einzelbilds nach dem Anpassen des Wertes des Bildparameters zu dem Gesamtbild (109), so dass das Gesamtbild (109) eine Surround-View Darstellung der Umgebung (110) des Kraftfahrzeugs umfasst.

6. Vorrichtung zum Anpassen eines Bildparameters eines ersten Einzelbildes (101) in einem Überlappungsbereich (105) mit einem zweiten Einzelbild (102) für ein zusammengesetztes Gesamtbild (109) einer Umgebung (110) eines Kraftfahrzeugs (100), die ausgebildet ist zum:
- Bereitstellen des ersten (101) und des zweiten (102) Einzelbildes,
- Ermitteln von mindestens einem Bildelement (111) in dem Überlappungsbereich (105), das jeweils in dem ersten (101) und in dem zweiten Einzelbild (102) vorhanden ist,
- Ermitteln eines jeweiligen Wertes des Bildparameters des Bildelementes (111) in dem ersten (101) und in dem zweiten (102) Einzelbild,
- Ermitteln eines Unterschiedes zwischen den beiden ermittelten Werten,
- Ermitteln eines Korrekturwertes für ein Anpassen des Wertes des Bildparameters des ersten Einzelbildes (101) im Überlappungsbereich in Abhängigkeit des ermittelten Unterschiedes.
